# EUROPEAN PATENT SPECIFICATION

(11) **EP 0 864 450 B1**
(45) Date of publication and mention of the grant of the patent: **28.05.2003**
(21) Application number: 98103927.4
(22) Date of filing: 05.03.1998
(51) Int. Cl.: B60C 23/04

(54) **A bearing assembly with an integrated current generator**
Lageranordnung mit eingebautem Stromgenerator
Arrangement d'un générateur de courant intégré à un palier

(30) Priority: 07.03.1997 IT TO970186
(43) Date of publication of application: 16.09.1998
(73) Proprietor: SKF INDUSTRIE S.p.A., 10123 Torino (IT)
(72) Inventor: Bertetti, Paolo, 10153 Torino (IT); Forestiero, Paolo, 10060 Airasca (TO) (IT); Rütter, Andreas, 10064 Pinerolo (TO) (IT)
(74) Representative: Di Francesco, Gianni

(56) References cited:
- WO-A-89/08031
- DE-A- 4 125 697
- DE-A- 4 138 844
- FR-A- 2 586 622
- US-A- 4 163 208
- US-A- 4 300 119
- US-A- 4 532 493
- US-A- 4 749 993
- US-A- 5 382 098

## Description

### Background of the Invention

The present invention refers to a bearing assembly, in particular for a vehicle wheel hub, having an integrated current generator.

### Prior art and short discussion thereof

The tyres of some vehicles have sensors for measuring tyre pressure or temperature. These sensors are coupled to a radiofrequency transmitter, also mounted on the wheel, for transmitting the detected data to a receiver fitted on board of the vehicle. Miniaturised batteries, integral with the transmitter or somehow connected thereto, power the rotating transmitter and the sensors.

The power feeding by means of batteries causes disadvantages from technical, operational and environmental points of view. The batteries have a short lifetime since they are positioned in high temperature places; further, they are subjected to high vibration, which makes the system scarcely reliable.

This solution is not too practical, since, to substitute a battery of the transmitting group, it is necessary to remove the tyre from the tyre rim. From the environmental point of view, there is the problem of collecting, eliminating and recycling the dead batteries.

The present invention realises a system to locally generate a current to feed the rotating member of the transmitter and thus avoiding the use of batteries and eliminating the related disadvantages.

US-A-5 440 184 discloses a rail car axle bearing with an integrated current generator; the generator comprises a stator with stator windings fast to the stationary part of the bearing, and a magnetised rotor mounted on the rotating part of the bearing.

Attention is also drawn to the disclosure of DE-A-4125697, which shows a bearing assembly according to the preamble of claim 1.

### Summary of the invention

The present invention discloses the realisation of a current feeding system of a rotating transmitter, in particular mounted on the wheel or on the tyre of a vehicle, wherein an alternate current generator is integral with the bearing. The generator configuration is reversed in comparison with the traditional generators. In the present invention, the generator comprises a.stator fast to the rotating part of the bearing and facing, during operation, a rotor fixed to the stationary part of the bearing.

The stator, fast to the wheel, rotates and thus feeds the transmitter means, e.g. a radiofrequency transmitter, which transmits information concerning the rotating members to receiver means positioned on board of the vehicle or somehow fast to the non rotating part.

### Short description of the drawings

The structural and operational features of some preferred, non limiting embodiments of the bearing assembly according to the invention will be described hereinafter; in reference to the attached drawings, in which:
Figures 1 and 2 show two possible schematic configurations of the bearing assembly according to the invention;
Figures 3 and 4 are, respectively, schematic views in axial section of the bearing assembly of a vehicle wheel hub, said bearing having two alternative embodiments of an integrated current generator; and
Figure 5 is a further schematic configuration of the bearing assembly according to the invention .

### Description of the preferred embodiments

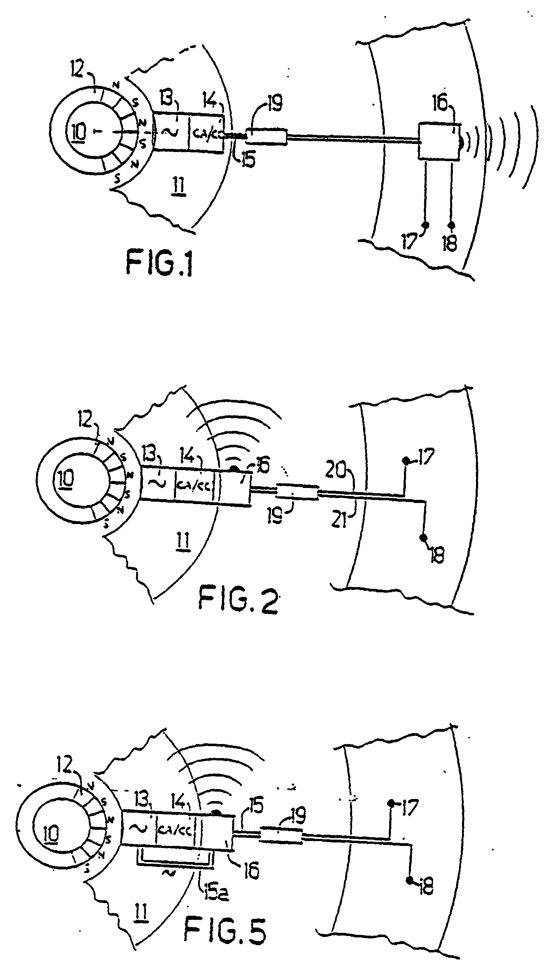

Referring initially to the scheme of Figure 1, numerals 10 and 11 indicates respectively the stationary ring and rotating ring of a bearing, in particular the bearing of a vehicle wheel hub. An alternate current generator is fixed to the bearing, said generator comprises a rotor 12 mounted on the bearing stationary ring 10, or as an alternative on the bearing support, and a stator 13 fast to the rotating ring 11.

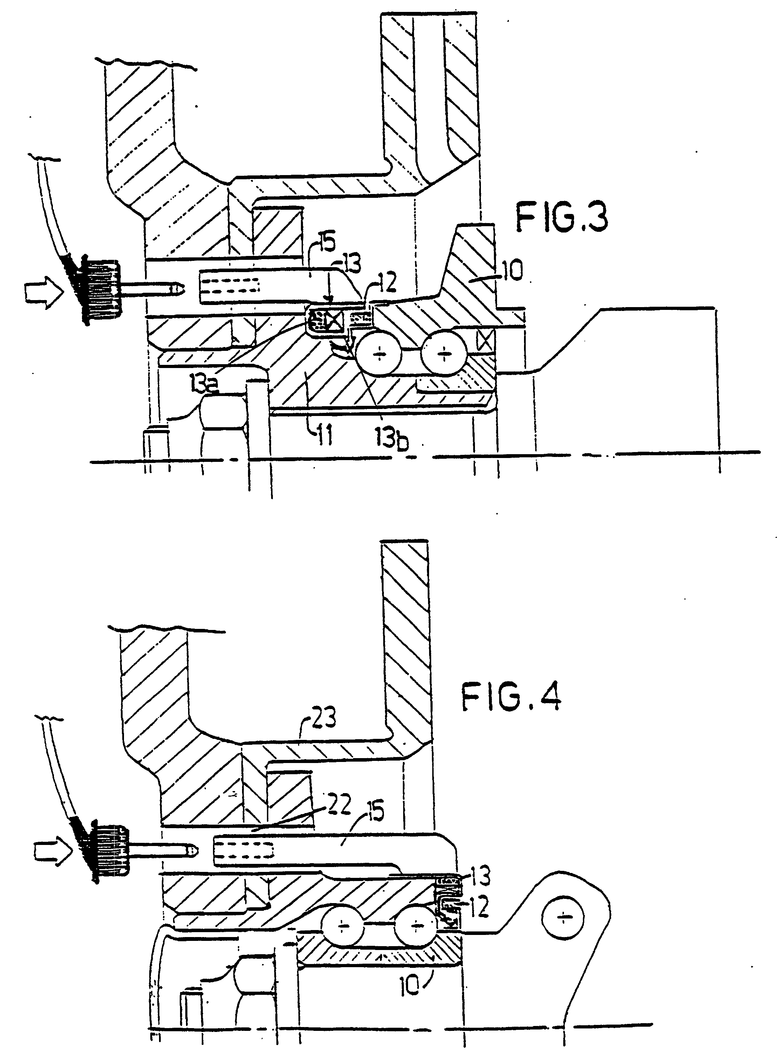

The generator can have different configurations for its components: the stator comprises necessarily a coil, while the rotor has an element suitable to generate electric pulses in the stator coil. As shown in the examples of Figures 3 and 4, the pulse generating element might be either a multipolar magnetised ring, facing the stator coil, or a toothed (or with openings) metallic ring facing a stator comprising a coil and a magnetised ring. In the example of Figure 3, the rotor 12 comprises a toothed ring fixed to the stationary ring 10 of the bearing; the stator 13, comprising a coil 13a placed on the side of a magnetised ring 13b, is fixed to the change the magnetic flow through the magnetised ring 13b and coil 13a, and thus an alternate current is generated in the coil.

Referring again to the scheme of Figure 1, an alternate current is generated at the coil 13 terminals having a frequency and an amplitude related to the rotating speed and to the generator features. The stator is connected to an AC/DC rectifier 14 which feeds direct current, through a feeding cable 15, to a transmitter 16, e.g. a radiofrequency transmitter, fast on tyre or on the tyre rim of the wheel. The transmitter is connected to one or more sensors 17, 18 which detect relevant data from the tyre, as for instance the pressure and/or the temperature, or the tread wear. The transmitter 16 transmits the data to a receiver (not shown) on board of the vehicle.

A connector 19 is preferably provided on the feeding cable 15 to cut the connection when the bearing has to be disassembled from the wheel.

In the scheme of Figure 2, a configuration alternative to that of Figure 1. In said alternative, the transmitter 16 is fitted in the bearing with the generator 12, 13 and with the rectifier 14, and it is connected through corresponding cables 20, 21 to the sensors 17, 18 positioned on the wheel or on the tyre.

The connecting cables 20, 21 are used just for transmitting the signals and not used for feeding purposes; also in this case one or more connectors 19 will preferably be provided in order to be able to remove the wheel from the bearing.

The sensor might comprise temperature probes or thermocouples mounted on the brakes to transmit, at the same time, information to the receiver through a single multichannel transmission system.

In a further alternative (not shown) of the schematic configuration of Figure 1, the rectifier 14 positioned between the generator and the transmitter will be integral with the transmitter on the wheel instead of being integral with the bearing.

Figure 4 shows an application alternative to that of Figure 3. In Figure 4, the rotating ring 11 of the bearing is the outer ring; the stator, comprising a coil 13, is mounted on said outer ring and the coil faces the rotor comprising a multipolar magnetised ring 12 mounted on the stationary ring 10 of the bearing. In the lower part of the drawing there is the feeding cable 15 which reaches the transmitter (not shown) mounted on the wheel through an opening 22 obtained in the drum brake 23.

It should be noted that the output signal from the generator, before being rectified, is an alternate current electric signal which contains information relevant to the angular speed and acceleration of the wheel. As shown in a schematic way in Figure 5, the generated signal can be advantageously, directly transmitted to the transmitter through a separate cable 15a without being rectified, in order to transmit kinematic data to the receiver.

Besides eliminating the disadvantages of the known art related to the use of batteries, the present invention eliminates all the cables currently provided on the ABS, ASR systems, therefore saving on weight, costs and achieving a better level of reliability.

Further, the configuration of the invention allows the transmission, at the same time, of multiple information to the receiver on board of the vehicle through a single system of multichannel transmission: e.g. data relevant to the tyre pressure and temperature, tread wear, brake temperature, lateral and longitudinal accelerations.

The invention is not limited by the embodiments herein described and illustrated, since such embodiments have to be considered as realisation examples of the bearing assembly, which is subject to changes of shape and of configuration, of structural and operational details. In particular, the invention can be used in sectors other than the automotive, generally wherever it is useful to obtain information concerning the rotating elements in order to control and/or monitor their operation.

## Claims

1. A bearing assembly, particularly for a vehicle wheel hub, comprising a stationary part (10), a rotating part (11), and an integrated current generator (12, 13) in turn comprising a rotor (12) mounted on the stationary part (10) and a stator (13) .fixed to the rotating part (11) for loyally generating an electric current; the bearing assembly further comprising transmitter means (16) powered by said electric current and fast for rotation with said rotating part, and sensor means (17, 18) connected to the transmitter means and fitted to a member fixed for rotation with said rotating part (11); said transmitter means (16) transmitting information concerning the rotating parts. (11) to receiver means mounted to a non-rotating part, in particular fitted on board of the vehicle; the bearing assembly being **characterised in that**. the rotor (12) and the stator (13) are integral with the stationary part (10) and, respectively, with the rotating part (11.). of the bearing assembly.

2. A bearing assembly as claimed in claim 1, **characterised in that** said transmitter means (16) are integral with said generator and are mounted onto the bearing.

3. A bearing assembly as claimed in claim 1, **characterised in that** said transmitter means (16) are positioned on the vehicle wheel.

4. A bearing assembly as claimed in claim 1,
**characterised by** comprising sensor means (17, 18) for detecting the pressure and temperature of the vehicle tyre, said sensor means being integrated with said transmitter means (16).

5. A bearing assembly as claimed in claim 1, **characterised in that** the generator generates a direct current for supplying said transmitter means (16) directly.

6. A bearing assembly as claimed in claim 1, **characterised in that** the current generator (12, 13) is an alternate current generator connected to a current rectifier (14) positioned along the connection between the stator (13) and the transmitter means (16).

7. A bearing assembly as claimed in claim 6, **characterised in that** the rectifier (14) is integral with the transmitter means and is mounted on the vehicle wheel.

8. A bearing assembly as claimed in claim 1, **characterised in that** the rectifier (14) is integral with the stator which is mounted on the rotating part of the bearing.

9. A bearing assembly as claimed in claim 1, **characterised in that** the sensor means comprise sensor means (17) of the temperature of the wheel tyre.

10. A bearing assembly as claimed in claim 1, **characterised in that** the sensor means comprise sensor means (18) of the pressure of the wheel tyre.

11. A bearing assembly as claimed in claim 1, **characterised in that** the sensor means comprise detecting means of the tread wear of the wheel tyre.

12. A bearing assembly as claimed in claim 1, **characterised in that** the sensor means comprise sensor means of the temperature of the vehicle wheel brake.

13. A bearing assembly as claimed in claim 1, **characterised in that** the output signal from the stator (13), besides being used to feed the transmitter means, is directly transmitted to the transmitter means (16) before being rectified, in order to transmit to the receiver means the kinematic data concerning the rotating parts.

14. A bearing assembly as claimed in claim 1, **characterised in that** the rotor (12) comprises a toothed (or with openings) ring fixed to the stationary ring (10) of the bearing, and that the stator (13) comprises a coil (13a) placed on the side of a magnetised ring (13b) both fixed to the rotating ring (11) of the bearing.

15. A bearing assembly as claimed in claim 1, **characterised in that** the rotor (12) comprises a multipolar magnetised ring mounted on the stationary ring (10) of the bearing, and that the stator comprises a coil (13) fixed to the rotating ring (11) of the bearing.

16. A bearing assembly as claimed in claim 1, **characterised in that** the elements mounted on the vehicle wheel are electrically connected to the elements mounted on the bearing through one or more cables provided with one or more connectors (15).

## Patentansprüche

1. Lageranordnung, insbesondere für eine Fahrzeugradnabe, umfassend ein stationäres Bauteil (10), ein rotierendes Bauteil (11) und einen integrierten Stromgenerator (12, 13), der wiederum einen Rotor (12), der an dem stationären Bauteil (10) befestigt ist, und einen an dem rotierenden Bauteil (11) angebrachten Stator (13) zur lokalen Erzeugung von elektrischem Strom umfasst, wobei die Lageranordnung des Weiteren eine durch den elektrischen Strom angetriebene und zur Drehung mit dem rotierenden Bauteil angebrachte Sendeeinrichtung (16) und eine mit der Sendeeinrichtung verbundene Sensoreinrichtung (17, 18) umfasst, die an einem Bauelement angebracht ist, das zur Drehung mit dem rotierenden Teil (11) befestigt ist, wobei die Sendeeinrichtung (16) Informationen bezüglich der rotierenden Teile (11) zu einer Empfangseinrichtung sendet, die an einem nicht rotierenden Bauteil angebracht ist, sich insbesondere an Bord eines Fahrzeuges befindet, wobei die Lageranordnung **dadurch gekennzeichnet ist, dass** der Rotor (12) und der Stator (13) in dem stationären Bauteil (10) bzw. dem rotierenden Bauteil (11) der Lageranordnung integriert sind.

2. Lageranordnung nach Anspruch 1,
**dadurch gekennzeichnet, dass** die Sendeeinrichtung (16) in den Generator eingebaut und an dem Lager angebracht ist.

3. Lageranordnung nach Anspruch 1,
**dadurch gekennzeichnet, dass** die Sendeeinrichtung (16) an dem Fahrzeugrad angeordnet ist.

4. Lageranordnung nach Anspruch 1,
**dadurch gekennzeichnet, dass** sie eine Sensoreinrichtung (17, 18) zum Erfassen des Fahrzeugreifendruckes und der Fahrzeugreifentemperatur umfasst, wobei die Sensoreinrichtung in der Sendeeinrichtung (16) integriert ist.

5. Lageranordnung nach Anspruch 1,
**dadurch gekennzeichnet, dass** der Generator einen Gleichstrom zur unmittelbaren Speisung der Sendeeinrichtung (16) erzeugt.

6. Lageranordnung nach Anspruch 1,
**dadurch gekennzeichnet, dass** der Stromgenerator (12, 13) ein Wechselstromgenerator ist, der mit einem Stromgleichrichter (14) verbunden ist, der wiederum in der Leitung zwischen dem Stator (13) und der Sendeeinrichtung (16) angeordnet ist.

7. Lageranordnung nach Anspruch 6,
**dadurch gekennzeichnet, dass** der Gleichrichter (14) in der Sendeeinrichtung integriert und am Fahrzeugrad befestigt ist.

8. Lageranordnung nach Anspruch 1,
**dadurch gekennzeichnet, dass** der Gleichrichter (14) in dem Stator integriert ist, der auf dem rotierenden Lagerbauteil befestigt ist.

9. Lageranordnung nach Anspruch 1,
**dadurch gekennzeichnet, dass** die Sensoreinrichtung einen Sensor (17) für die Reifentemperatur umfasst.

10. Lageranordnung nach Anspruch 1,
**dadurch gekennzeichnet, dass** die Sensoreinrichtung einen Sensor (18) für den Reifendruck umfasst.

11. Lageranordnung nach Anspruch 1,
**dadurch gekennzeichnet, dass** die Sensoreinrichtung eine den Verschleiß der Reifenlauffläche erfassende Einrichtung ist.

12. Lageranordnung nach Anspruch 1,
**dadurch gekennzeichnet, dass** die Sensoreinrichtung einen Sensor für die Temperatur der Fahrzeugradbremse umfasst.

13. Lageranordnung nach Anspruch 1,
**dadurch gekennzeichnet, dass** das Ausgangssignal von dem Stator (13) neben dem, dass es zur Einspeisung in die Sendeeinrichtung verwendet wird, bevor es gleichgerichtet wird, direkt zu der Sendeeinrichtung (16) übertragen wird, um der Empfangseinrichtung die kinematischen Daten betreffend die rotierenden Bauteile zu übertragen.

14. Lageranordnung nach Anspruch 1,
**dadurch gekennzeichnet, dass** der Rotor (12) einen gezahnten (oder Öffnungen aufweisenden) Ring umfasst, der an dem stationären Lagerring (10) befestigt ist, und dass der Stator (13) eine Spule (13a) umfasst, die an der Seite eines magnetisierten Ringes (13b) angeordnet ist, wobei beide an dem rotierenden Lagerring (11) fixiert sind.

15. Lageranordnung nach Anspruch 1,
**dadurch gekennzeichnet, dass** der Rotor (12) einen mehrpoligen magnetisierten Ring umfasst, der an dem stationären Lagerring (10) befestigt ist, und dass der Stator eine Spule (13) umfasst, die an dem rotierenden Lagerring (11) befestigt ist.

16. Lageranordnung nach Anspruch 1,
**dadurch gekennzeichnet, dass** die an dem Fahrzeugrad befestigten Elemente mit den an dem Lager befestigten Elementen über ein oder mehrere Kabel, die mit ein oder mehreren Anschlüssen (15) versehen sind, elektrisch verbunden sind.

## Revendications

1. Ensemble de palier, en particulier pour le moyeu d'un véhicule, comprenant une partie fixe (10), une partie rotative (11), et un générateur de courant intégré (12, 13) comprenant à son tour un rotor (12) monté sur la partie fixe (10) ct un stator (13) fixé sur la partie rotative (11) pour générer localement un courant électrique ; l'ensemble de palier comprenant en outre des moyens de transmission (16) alimentés par ledit courant électrique et fixés de manière à tourner avec ladite partie rotative, et des moyens de détection (17, 18) connectés aux moyens de transmission et installés sur un élément fixé de manière à tourner avec ladite partie rotative (11) ; lesdits moyens de transmission (16) transmettant les informations concernant les parties rotatives (11) aux moyens de réception montés sur une partie non rotative, en particulier installés à bord du véhicule ; l'ensemble de palier étant **caractérisé en ce que** le rotor (12) et le stator (13) sont formés d'un seul tenant avec la partie fixe (10) et, respectivement, avec la partie rotative (11) de l'ensemble de palier.

2. Ensemble de palier selon la revendication 1, **caractérisé en ce que** lesdits moyens de transmission (16) sont formés d'un seul tenant avec ledit qénérateur et sont montés sur le palier.

3. Ensemble de palier selon la revendication 1, **caractérisé en ce que** lesdits moyens de transmission (16) sont placés sur la roue du véhicule.

4. Ensemble de palier selon la revendication 1, **caractérisé en ce qu'**il contient des moyens de détection (17, 18) permettant de détecter la pression et la température du pneu du véhicule, lesdits moyens de détection étant formés d'un seul tenant avec lesdits moyens de transmission (16).

5. Ensemble de palier selon la revendication 1, **caractérisé en ce que** le générateur génère un courant continu pour alimenter directement lesdits moyens de transmission (16).

6. Ensemble de palier selon la revendication 1, **caractérisé en ce que** le générateur de courant (12, 13) est un générateur de courant alternatif connecté à un redresseur (14) placé le long de la connexion entre le stator (13) et les moyens de transmission (16).

7. Ensemble de palier selon la revendication 6, **caractérisé en ce que** le redresseur (14) est formé d'un seul tenant avec les moyens de transmission et est monté sur la roue du véhicule.

8. Ensemble de palier selon la revendication 1, **caractérisé en ce que** le redresseur (14) est formé d'un seul tenant avec le stator qui est monté sur la partie rotative du palier.

9. Ensemble de palier selon la revendication 1, **caractérisé en ce que** les moyens de détection comprennent des moyens de détection (17) de la température du pneu.

10. Ensemble de palier selon la revendication 1, **caractérisé en ce que** les moyens de détection comprennent des moyens de détection (18) de la pression du pneu.

11. Ensemble de palier selon la revendication 1, **caractérisé en ce que** les moyens de détection comprennent des moyens de détection de l'usure de la bande de palier du pneu.

12. Ensemble de palier selon la revendication 1, **caractérisé en ce que** les moyens de détection comprennent des moyens de détection de la température du frein de la roue du véhicule.

13. Ensemble de palier selon la revendication 1, **caractérisé en ce que** le signal de sortie provenant du stator (13), outre son utilisation pour alimenter les moyens de transmission, est directement transmis aux moyens de transmission (16) avant d'être redressé, afin de transmettre aux moyens de réception les données cinématiques concernant les parties rotatives.

14. Ensemble de palier selon la revendication 1, **caractérisé en ce que** le rotor (12) comprend une couronne crantée (ou avec des ouvertures) fixée à la couronne fixe (10) du palier, et **en ce que** le stator (13) comprend une bobine (13a) placée sur le côté d'une couronne aimantée (13b), toutes deux fixées à la couronne rotative (11) du palier.

15. Ensemble de palier selon la revendication 1, **caractérisé en ce que** le rotor (12) comprend une couronne aimantée multipolaire montée sur la couronne fixe (10) du palier, et **en ce que** le stator comprend une bobine (13) fixée à la couronne rotative (11) du palier.

16. Ensemble de palier selon la revendication 1, **caractérisé en ce que** les éléments montés sur la roue du véhicule sont connectés par voie électrique aux éléments montés sur le palier par l'intermédiaire d'un ou de plusieurs câbles présentant un ou plusieurs connecteurs (15).
